# EUROPÄISCHE PATENTSCHRIFT

(11) **EP 3 047 921 B1**
(45) Veröffentlichungstag und Bekanntmachung des Hinweises auf die Patenterteilung: **26.09.2018**
(21) Anmeldenummer: 15200230.9
(22) Anmeldetag: 15.12.2015
(51) Int. Cl.: B22D 13/04, B22D 13/10, B22C 9/20, F16D 65/12

(54) **SCHLEUDERGUSSKOKILLENVORRICHTUNG ZUR HERSTELLUNG VON BREMSSCHEIBEN UND DEREN VERWENDUNGEN**
SPINNER CASTING MOULD DEVICE FOR PRODUCING BRAKE DISKS AND THEIR USES
DISPOSITIF DE LINGOTIÈRE POUR LA COQUILLE DE COULÉE CENTRIFUGE DESTINÉ À FABRIQUER DES DISQUES DE FREIN ET SES UTILISATIONS

(30) Priorität: 20.01.2015 DE 102015100807
(43) Veröffentlichungstag der Anmeldung: 27.07.2016
(73) Patentinhaber: Buderus Guss GmbH, 35236 Breidenbach (DE)
(72) Erfinder: Altenkirch, Frank, 35305 Grünberg (DE)
(74) Vertreter: Patentanwälte Olbricht Buchhold Keulertz

(56) Entgegenhaltungen:
- CN-A- 1 188 697
- DE-A1- 2 115 299
- DE-A1- 2 319 624
- DE-A1- 4 420 138
- DE-A1-102011 003 097
- DE-C1- 19 639 514
- JP-A- S6 186 059
- JP-A- H03 281 034
- JP-A- H07 227 644
- JP-A- H07 227 646
- Jhg 59: "Rundschau Giesserei voestalpine Giesserei Linz GmbH", , 1. Januar 2012 (2012-01-01), XP055272912, Gefunden im Internet: URL:http://www.voeg.at/upload/editor/File/ archiv/2012/11-12/Giesserei_11_12_2012.pdf [gefunden am 2016-05-17]

## Beschreibung

Die Erfindung betrifft eine Schleudergusskokillenvorrichtung zur Herstellung von Bremsscheiben gemäß Anspruch 1 sowie deren Verwendung nach den Ansprüchen 13, 14 und 15.

Bremsscheiben werden im Stand der Technik mit verlorenen Formen, insbesondere Sandformen hergestellt. Die Herstellung solcher einmalig verwendbarer Sandformen ist aufwendig und teuer. Insbesondere auch das Recycling von Kreislaufmaterial, insbesondere das Trennen und Aufbereiten von Quarz, Sand und Metallresten führt zu hohen Produktionskosten. Mit solchen verlorenen Formen hergestellte Bremsscheibenrohlinge haben außerdem eine geringe Maßhaltigkeit und eine raue Oberfläche. Daher müssen diese aufwendig durch Bohren, Fräsen, Drehen und Gewindeschneiden nachbearbeitet werden, um später in ein Fahrzeug eingebaut werden zu können.

Weiterhin kann Wärme nur langsam aus den Sandformen entweichen, sodass der Gießprozess lange dauert. Dabei ist die thermische Verteilung in der Form kaum beeinflussbar.

Bremsscheiben weisen normalerweise einen äußeren Reibring und einen inneren Trägertopf bzw. eine innere Achsbefestigungseinrichtung auf. Der Reibring korrespondiert im Einsatz mit Bremsklötzen, die gegen den Reibring gepresst werden. Zum Abführen von Wärme können Ausnehmungen in dem Reibring ausgebildet sein. Innenbelüftete Reibringe verfügen über sich radial erstreckende Kühlkanäle. Außerdem sind gelochte Reibringe bekannt.

DE 10 2011 003097 A1 zeigt ein Gießverfahren zur Herstellung einer Bremsscheibe für ein Fahrzeug, bei der in einer Kokille ein zentrales mit einer Radnabe verbindbares Tragteil in eine Öffnung eines Reibringes eingegossen wird, indem eine Schmelze in einen Formhohlraum der Kokille eingebracht wird, wodurch das in dem Formhohlraum entstehende Tragteil an den Reibring angegossen wird. Die Kokille und der Reibring werden beim Einbringen der Schmelze als Einheit gemeinsam um eine Rotationsachse gedreht. Darüber hinaus werden eine Gießvorrichtung sowie eine Gießanlage mit mehreren derartigen Gießvorrichtungen für ein Gießverfahren zur Herstellung einer Bremsscheibe für ein Fahrzeug gezeigt.

DE 196 39 514 C1 beschreibt ein Verfahren zum Herstellen von gesteuert erstarrten Präzisionsgussteilen durch Schleudergießen einer Schmelze unter Vakuum oder Schutzgas. Dies erfolgt in einer vorgeheizten Kokille mit einem zentralen Eingusskanal und mehreren von diesem zum Außenumfang der Kokille gerichteten Formhohlräumen, die von einem Werkstoff oder einer Werkstoffkombination mit einem Wärmeleitungskoeffizienten umgeben sind, der kleiner als der von Kupfer ist.

Die japanische Schrift JP H07 227646 A offenbart ein Schleudergießverfahren zur Herstellung von Rohlingen für Kolbenringe.

Aus der japanischen Schrift JP S61 86059 A ist eine Schleudergusskokillenvorrichtung bekannt, mit der eine Vielzahl von Teilen einheitlicher Hohl-Produkte herstellbar ist.

JP H07 227644 A zeigt eine Schleudergusskokillenvorrichtung mit mehreren aufeinander gestapelten Kokillenformen. Um einen Angusshohlraum entlang einer Rotationsachse sind jeweils mehrere Hohlräume zwischen jeweils zwei der Kokillenformen ausgebildet.

Aufgabe der Erfindung ist es, eine Vorrichtung bereitzustellen, mit der die Nachteile des Standes der Technik beseitigt werden und Bremsscheiben mit hoher Maßhaltigkeit, hoher Materialgüte sowie schnell und kostengünstig herstellbar sind.

Hauptmerkmale der Erfindung sind im kennzeichnenden Teil von Anspruch 1 und den Ansprüchen 13, 14 und 15 angegeben. Ausgestaltungen sind Gegenstand der Ansprüche 2 bis 12 und 16 bis 17.

Die Erfindung betrifft eine Schleudergusskokillenvorrichtung zur Herstellung von Bremsscheiben, aufweisend eine Kokillenhülle aus Metall, die um eine Rotationsachse rotierbar ist und wenigstens zwei Kokillenformteile, welche in die Kokillenhülle eingesetzt und aus dieser entnehmbar sind. Dabei verbleibt ein Hohlraum in der Kokillenhülle, der einen Angusstrommelraum aufweist, welcher sich entlang der Rotationsachse erstreckt und mit einer Angussöffnung verbunden ist, und welcher wenigstens einen ringförmigen Formhohlraum zur Ausbildung eines Reibrings einer Bremsscheibe und/oder eines Trägertopfes einer Bremsscheibe aufweist. Der ringförmige Formhohlraum fasst die Rotationsachse radial ein und steht mit dem Angusstrommelraum in Verbindung.

Vorteilhaft an einer derartig ausgestalteten Schleudergusskokillenvorrichtung ist, dass mit einer solchen im Schleudergussverfahren Bremsscheiben mit hoher Oberflächenqualität herstellbar sind. Durch das Schleudern werden insbesondere Lufteinschlüsse verhindert. Die Oberflächenqualität ist hoch, sodass nur wenig Nacharbeit erforderlich ist. Außerdem leiten Schleudergusskokillen aus Metall schon als solche Wärme schnell ab. Sie können zudem einfach mit Kühlkanälen für ein flüssiges Kühlmittel ausgestattet werden, um die Abkühlung noch weiter zu beschleunigen. Entsprechend schnell kann eine Bremsscheibe nach dem Gießen entnommen werden. Außerdem kann die Abkühlung durch Kühlkanäle lokal eingestellt werden. Wenigstens die Kokillenhülle ist hierbei wiederverwertbar, sodass die Herstellkosten pro Bremsscheibe gering sind. Es fällt vor allem wenig oder gar kein Kreislaufmaterial an, welches recycelt werden müsste. Bevorzugt sind die Kokillenformteile dabei positionsfest in die Kokillenhülle eingesetzt. In der Kokillenhülle eingesetzt können die Kokillenformteile den Angusstrommelraum radial einfassen. Die Wandung des Angusstrommelraums wird dann weitestgehend von den Kokillenformteilen ausgebildet.

In einer näheren Ausgestaltung der Erfindung ist vorgesehen, dass jeder der ringförmigen Formhohlräume zwei ebene und parallel gegenüberliegende Ringflächen aufweist, die vorzugsweise jeweils koaxial zur Rotationsachse ausgerichtet sind. Diese Ringflächen sind zur Ausbildung der Reibflächen eines Reibrings geeignet. Zur Herstellung kreisrunder Bremsscheiben sollten die Formhohlräume einen kreisförmigen Außendurchmesser aufweisen.

Optional ist es auch möglich, den oder die Formhohlräume nicht-koaxial, bspw. beabstandet und/oder geneigt zur Rotationsachse anzuordnen. Insbesondere bei einer Mehrfachbelegung einer Kokille kann solch eine Belegung genutzt werden. Bevorzugt ist jedoch eine koaxiale Anordnung der Rotationsachse, der Kokillenhülle, des Angusstrommelraums und des bzw. der Formhohlräume. Hierdurch lassen sich die Fülldrücke in den Formhohlräumen beim Schleudern sehr gut einstellen.

Gemäß einer optionalen Ausgestaltung ist jeder der ringförmigen Formhohlräume und/oder der Angusstrommelraum koaxial zur Rotationsachse ausgerichtet. Entsprechend herrschen bei einer Rotation um die Rotationsachse keine Unwuchten. Hierdurch wird der Formhohlraum gleichmäßig mit flüssigem Metall befüllt.

Weiterhin sieht eine spezielle Ausgestaltung der Schleudergusskokillenvorrichtung vor, dass die Kokillenformteile jeweils ringförmig ausgebildet sind und die Rotationsachse radial umgeben. Auf diese Weise lassen sich Trennlinien auf dem Reibring vermeiden. Die Kokillenformteile sollten koaxial zur Rotationsachse ausgerichtet sein. Außerdem bietet es sich an, dass die Kokillenformteile mit ihrem Außenumfang an der Innenseite der Kokillenhülle anliegen.

Eine Variante der Schleudergusskokillenvorrichtung betrifft die Kokillenhülle, an der wenigstens ein Lagerelement ausgebildet oder angeordnet ist, das koaxial zur Rotationsachse positioniert ist. Mit einem solchen Lagerelement kann die Schleudergusskokillenvorrichtung in einer Schleuderanlage aufgenommen werden. Geeignet als Lagerelement sind insbesondere eine Achse, eine Achsaufnahme oder ein Lagerring. Mit letzterem lässt sich die Schleudergusskokillenvorrichtung auf parallelen Tragwellen/-rollen lagern. Derartige Tragwellen können auch rotierend angetrieben sein und damit die Schleudergusskokillenvorrichtung um die Rotationsachse rotierend bewegen.

Es besteht die Option, dass wenigstens eines der Kokillenformteile aus einem Formsand hergestellt ist, bzw. dass wenigstens eines der Kokillenformteile als verlorene Form ausgebildet ist. Vorzugsweise ist jedoch wenigstens eines der Kokillenformteile als Dauerform ausgebildet, und besonders bevorzugt jedes Kokillenformteil.

Eine Ausgestaltungsvariante sieht daher vor, dass die Kokillenformteile aus Metall bestehen. Diese lassen sich wiederverwerten und leiten außerdem Wärme gut aus dem Formhohlraum ab. Außerdem können in solchen metallischen Kokillenformteilen Kühlkanäle eingebracht sein.

Bei einer alternativen Ausgestaltung der Schleudergusskokillenvorrichtung ist die Kokillenhülle öffenbar ausgebildet, vorzugsweise durch einen stirnseitigen Deckel, der quer zur Rotationsachse angeordnet ist, oder durch eine Trennebene, welche die Kokillenhülle in zwei Schalen teilt. Entsprechend einfach können die Kokillenformteile aus der Kokillenhülle entnommen werden. Eine Ausgestaltung mit Deckel eignet sich insbesondere eher für kürzere Kokillenhüllen. Die Deckel können jeweils von einem Kokillenformteil ausgebildet sein bzw. einteilig mit diesem ausgebildet sein. Eine Trennebene ist besonders dann geeignet, wenn die Kokillenhülle lang ausgebildet ist, sich zum Beispiel über mehrere Meter erstreckt. Auf diese Weise wird eine einfache Zugänglichkeit zu den Kokillenformteilen gewährleistet. Die Trennebene kann quer oder senkrecht zur Rotationsachse verlaufen. Dann können Kokillenformteile auf beiden Seiten der Trennebene entnommen werden. Bei einer diagonalen Trennebene sind die Kokillenformteile quer und/oder längs zur Rotationsachse aus der Kokillenhülle entnehmbar. Bevorzugt ist der Verlauf der Trennebene jedoch parallel zur Rotationsachse, weil die Kokillenhülle hierdurch einfach aufklappbar bzw. eine Hälfte davon abhebbar ist.

Zur Herstellung von innenbelüfteten Bremsscheiben besteht die Option, dass in wenigstens einen, vorzugsweise in jeden, der ringförmigen Formhohlräume ein verlorener Kern, vorzugsweise ein Sandkern, zur Ausbildung einer Belüftungsstruktur im Reibring eingelegt ist. Ein solcher verlorener Kern kann als Scheibenring mit Durchbrüchen, vorzugsweise mit schlitzförmigen Durchbrüchen, ausgebildet sein.

Bevorzugt liegt jeder der ringförmigen Formhohlräume in einer Trennebene zwischen zwei benachbarten Kokillenformteilen. Entsprechend liegt nach dem Gießen ein Stapel bestehend aus Bremsscheiben und Kokillenformteilen vor, die abwechselnd angeordnet sind.

Eine spezielle Ausgestaltungsoption sieht vor, dass zwischen den Kokillenformteilen ein Reibring oder ein Trägertopf eingelegt ist, der an einen der ringförmigen Formhohlräume angrenzt. Mithin ist es möglich, entweder an einen Reibring einen Trägertopf anzugießen oder umgekehrt. Hierdurch kann beispielsweise eine Bremsscheibe mit einem Reibring aus eisenhaltigem Metall und einem Trägertopf aus Aluminium hergestellt werden. Es ergibt sich eine besonders leichte Bremsscheibe mit geringer Rotationsmasse.

Hohe Produktionsstückzahlen zu geringen Kosten werden bei einer speziellen Ausgestaltung erreicht, bei welcher wenigstens zwei, vorzugsweise wenigstens drei und besonders bevorzugt wenigstens fünf ringförmige Formhohlräume ausgebildet sind. In der Praxis lassen sich durchaus Schleudergusskokillenvorrichtung umsetzen, die bis zu 50 ringförmige Formhohlräume aufweisen. Als Kokillenhülle können beispielsweise Kokillenhüllen verwendet werden, die ursprünglich zur Herstellung von nahtlosen zylindrischen Rohren verwendet wurden. Aufgrund des zylindrischen Außenumfangs von Bremsscheiben, bietet es sich an, auch die Kokillenhülle mit einer zylindrischen Innenwandung auszubilden. Außerdem weist die Kokillenhülle bevorzugt eine zylindrische Außenwandung auf.

Eine Kokillenhülle mit minimalem Durchmesser kann dann erreicht werden, wenn die Kokillenhülle die ringförmigen Formhohlräume radial begrenzt. Hierdurch kann die Schleudergusskokillenvorrichtung schnell gekühlt werden.

Die Erfindung betrifft außerdem eine Verwendung einer Schleudergusskokillenvorrichtung wie sie zuvor beschriebenen ist zur Herstellung eines Reibrings einer Bremsscheibe, oder eines Trägertopfes einer Bremsscheibe, oder einer Bremsscheibe mit einem Reibring und einem Trägertopf, oder einer Bremsscheibe durch Angießen eines Trägertopfes an einem Reibring, oder einer Bremsscheibe durch Angießen eines Reibrings an einem Trägertopf, jeweils in einem Schleudergießverfahren.

Vorteilhaft an der Verwendung ist, dass Bremsscheiben mit hoher Oberflächenqualität, gleichbleibender Materialgüte und kostengünstig herstellbar sind. Je nach Ausgestaltung der Schleudergusskokillenvorrichtung sind auch die weiteren zuvor beschriebenen Vorteile von dieser realisierbar.

In einer Variante der Verwendung ist vorgesehen, dass ein Heißkokillenverfahren durchgeführt wird, bei dem die Wandungen der ringförmigen Formhohlräume vor dem Eingießen von flüssigem Metall in die Angussöffnung beschichtet und auf wenigstens 150°C, vorzugsweise auf wenigstens 200 °C vorgewärmt werden. Hierdurch wird verhindert, dass einströmendes flüssiges Metall zu früh erstarrt und zu stark an den Wandungen abgeschreckt wird. Dies wirkt sich positiv auf die Gefügebildung des Metalls aus. Vor allem wird Weißerstarrung vermieden, welche ungeeignet als Reibfläche und Bearbeitungszone ist. Als flüssiges Metall kommen eisenhaltige und aluminiumhaltige Werkstoffe in Betracht. Eisenhaltige Werkstoffe eignen sich insbesondere zur Herstellung des Reibringes wohingegen aluminiumhaltige Werkstoffe beispielsweise zur Herstellung des Trägertopfes eingesetzt werden können.

Gemäß einer weiteren Variante der Verwendung wird ein De-Lavaud-Verfahren durchgeführt, bei dem die Kokillenhülle und/oder die Kokillenformteile mit einem Fluid, vorzugsweise mit Wasser, gekühlt werden. Hierdurch lässt sich die Erstarrungsgeschwindigkeit einstellen. Die Gefügestrukturen können so lokal auf ihre Anforderungen hin abgestimmt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Längsschnitt durch eine schematisch dargestellte Schleudergusskokillenvorrichtung zur Herstellung von einer Vielzahl an innenbelüfteten Bremsscheiben;
- Fig. 2: einen Längsschnitt durch eine weitere schematisch dargestellte Schleudergusskokillenvorrichtung zur Herstellung von zwei innenbelüfteten Bremsscheiben; und
- Fig. 3: einen Längsschnitt durch eine weitere schematisch dargestellte Schleudergusskokillenvorrichtung zur Herstellung von zwei nicht belüfteten Bremsscheiben.

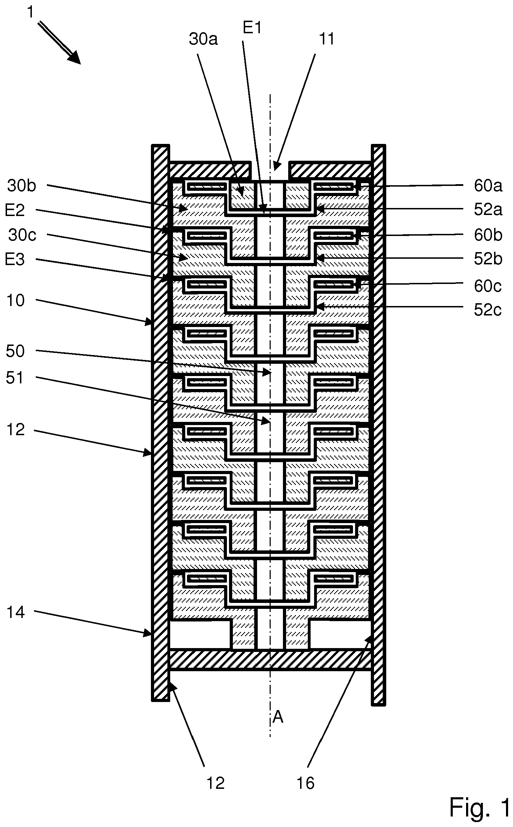

**Fig. 1** zeigt einen Längsschnitt durch eine schematisch dargestellte Schleudergusskokillenvorrichtung 1 zur Herstellung von einer Vielzahl an innenbelüfteten Bremsscheiben, hier insbesondere neun Stück. Eine Kokillenhülle 10 aus Metall ist im Wesentlichen als zylindrisches Rohr ausgebildet. Sie weist eine zylindrische Innenwandung 16 und eine zylindrische Außenwandung auf. Die Kokillenhülle 10 ist um eine Rotationsachse A rotierbar. Diese Rotationsachse A ist koaxial zur Rohrachse der Kokillenhülle 10. Im Bereich der Rohrenden ist die Kokillenhülle 10 jeweils mit einer Abschlussplatte verschlossen.

Im Inneren der Kokillenhülle 10 sind Kokillenformteile 30a, 30b, 30c angeordnet, welche aus der Kokillenhülle 10 entnehmbar sind. Insbesondere sind die Kokillenformteile 30a, 30b, 30c übereinandergestapelt. Neun der Kokillenformteile 30b, 30c sind als Gleichteile ausgebildet. Ein weiteres Kokillenformteil 30a bildet einen Stapelabschluss, wofür es eine abweichende Geometrie aufweist. Die Kokillenformteile 30a, 30b, 30c sind jeweils ringförmig ausgebildet und umgeben die Rotationsachse A radial, zu welcher sie auch koaxial ausgerichtet sind. Die Kokillenformteile 30a, 30b, 30c sind als Dauerform ausgelegt und bestehen aus Metall.

In der Kokillenhülle 10 verbleibt auch nach dem Einsetzen der Kokillenformteile 30a, 30b, 30c ein Hohlraum 50. Dieser Hohlraum 50 umfasst einen Angusstrommelraum 51, der sich entlang der Rotationsachse A erstreckt und mit einer Angussöffnung 11 in der Kokillenhülle 10 bzw. in einer der Abschlussplatten verbunden ist. Außerdem weist der Hohlraum 50 ringförmige Formhohlräume 52a, 52b, 52c, insbesondere 9 Stück, jeweils zur Ausbildung eines Reibrings und eines Trägertopfes einer Bremsscheibe auf. Diese fassen jeweils die Rotationsachse A radial ein und stehen jeweils mit dem Angusstrommelraum 51 in Verbindung. Insbesondere fassen die Kokillenformteile 30a, 30b, 30c den Angusstrommelraum 51 radial ein und bilden dessen Trommelwandung aus.

Jeder der ringförmigen Formhohlräume 52a, 52b, 52c verfügt über zwei ebene und parallel gegenüberliegende Ringflächen. Diese sind jeweils koaxial zur Rotationsachse A ausgerichtet und dienen der Ausbildung der Reibflächen eines Reibrings. Die Formhohlräume 52a, 52b, 52c haben einen kreisförmigen Außenumfang.

Man sieht, dass jeder der ringförmigen Formhohlräume 52a, 52b, 52c in einer Trennebene E1, E2, E3 zwischen zwei benachbarten Kokillenformteilen 30a, 30b, 30c liegt. Die gegenüberliegenden Ringflächen werden jeweils von benachbarten Kokillenformteilen 30a, 30b, 30c ausgebildet.

Zu sehen ist des Weiteren, dass in jeden der ringförmigen Formhohlräume 52a, 52b, 52c ein verlorener Kern 60a, 60b, 60c zur Ausbildung einer Belüftungsstruktur im Reibring eingelegt ist. Die verlorenen Kerne 60a, 60b, 60c sind jeweils als Scheibenring mit schlitzförmigen Durchbrüchen ausgebildet.

Sowohl die ringförmigen Formhohlräume 52a, 52b, 52c als auch der Angusstrommelraum 51 sind koaxial zur Rotationsachse A ausgerichtet. Dies trifft auch auf die verlorenen Kerne 60a, 60b, 60c zu.

Damit sich die Geometrie des Hohlraums 50 beim Schleudergießen nicht verändert, sind die Kokillenformteile 30a, 30b, 30c alle positionsfest in die Kokillenhülle 10 eingelegt. In Richtung der Rotationsachse A wird der Stapel der Kokillenformteile 30a, 30b, 30c von den endseitigen Abschlussplatten eingespannt. Quer zur Rotationsachse A liegen die Kokillenformteile 30a, 30b, 30c mit ihrem Außenumfang an der Innenwandung 16 der Kokillenhülle 10 an. Zur Vermeidung von relativen Rotation sind bevorzugt zumindest die Kokillenformteile 30a, 30b, 30c rotationsfest miteinander verbunden. Vorzugsweise werden die Kokillenformteile 30a, 30b, 30c auch drehfest mit der Kokillenhülle 10 verbunden. Geeignet sind beispielsweise Nut- und Federausgestaltungen oder eine Stange parallel zur Rotationsachse A in einem Durchgangsloch durch die Kokillenformteile 30a, 30b, 30c.

Nicht zu erkennen ist in Fig. 1, dass die Kokillenhülle 10 öffenbar ausgebildet ist, insbesondere durch eine Trennebene parallel zur Rotationsachse A, welche die Kokillenhülle 10 in zwei Schalen teilt.

Eine solche Schleudergusskokillenvorrichtung 1 kann auf Tragwalzen/-rollen aufgelegt werden, auf welchen sie um die Rotationsachse A drehbar ist. Die zylindrische Außenwandung der Kokillenhülle 10 bildet mithin einen Lagerring bzw. ein Lagerelement 12 aus, das koaxial zur Rotationsachse A ausgerichtet ist.

Optional kann zwischen den Kokillenformteilen 30a, 30b, 30c jeweils ein Reibring eingelegt werden, der jeweils an einen der ringförmigen Formhohlräume 52a, 52b, 52c angrenzt. Auf diese Weise lässt sich an die Reibringe jeweils ein Trägertopf angießen, vorzugsweise aus einem abweichenden Material wie Aluminium.

Sofern optional zwischen den Kokillenformteilen 30a, 30b, 30c jeweils ein Trägertopf eingelegt würde, der jeweils an einen der ringförmigen Formhohlräume 52a, 52b, 52c angrenzt, wären zusätzliche Strömungskanäle zwischen dem Bereich des Reibrings und der Angusstrommel 51 erforderlich.

Die Schleudergusskokillenvorrichtung 1 kann damit in Schleudergießverfahren verwendet werden, bei denen ein Reibring einer Bremsscheibe, oder ein Trägertopf einer Bremsscheibe, oder eine Bremsscheibe mit einem Reibring und einem Trägertopf, oder eine Bremsscheibe durch Angießen eines Trägertopfes an einem Reibring, oder eine Bremsscheibe durch Angießen eines Reibrings an einem Trägertopf hergestellt werden. Geeignet ist die Vorrichtung 1 auch für Heißkokillenverfahren, bei denen die Wandungen der ringförmigen Formhohlräume vor dem Eingießen von flüssigem Metall in die Angussöffnung 11 beschichtet und auf wenigstens 150°C, vorzugsweise auf wenigstens 200 °C vorgewärmt werden. Alternativ oder ergänzend ist ein De-Lavaud-Verfahren durchführbar, bei dem die Kokillenhülle 10 und/oder die Kokillenformteile 30a, 30b, 30c mit einem Fluid, vorzugsweise mit Wasser, gekühlt werden.

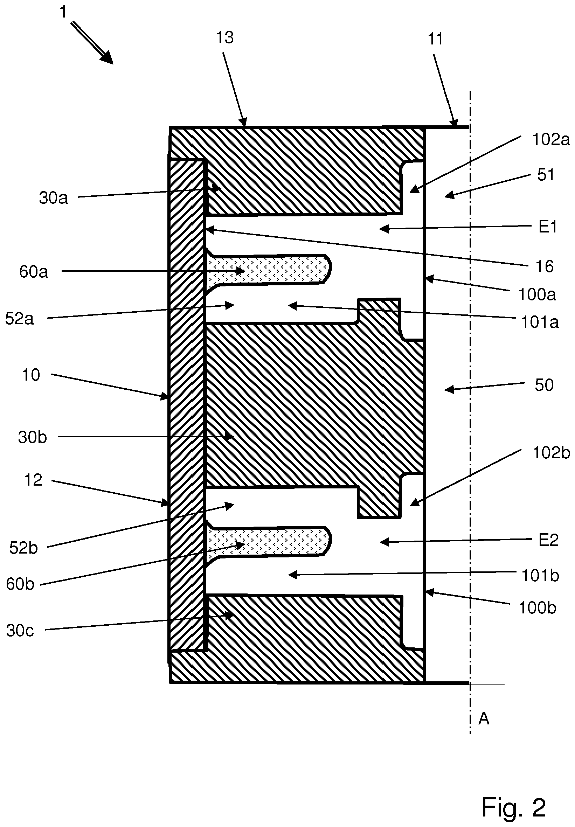

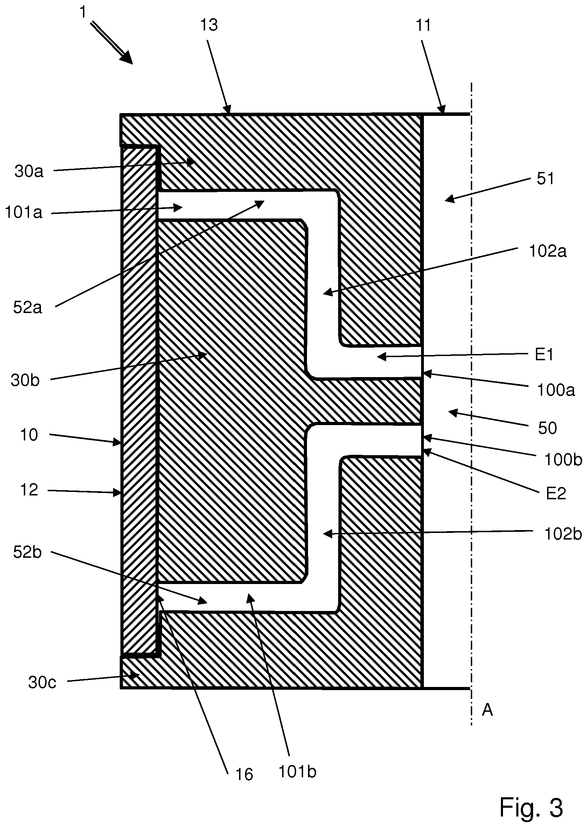

In den **Fig. 2** **und** **3** ist jeweils ein Längsschnitt durch eine schematisch dargestellte Schleudergusskokillenvorrichtung 1 zur Herstellung von zwei Bremsscheiben 100a, 100b gezeigt. Die Schleudergusskokillenvorrichtung 1 weist eine rohrförmige, zylindrische Kokillenhülle 10 aus Metall auf, die um eine Rotationsachse A rotierbar ist.

Es sind drei Kokillenformteile 30a, 30b, 30c aus Metall in die Kokillenhülle 10 eingesetzt und aus dieser entnehmbar. Zwei der Kokillenformteile 30a, 30c sind einteilig mit jeweils einem stirnseitigen Deckel 13 an den Enden der Kokillenhülle 10 ausgebildet. Das dritte Kokillenformteil 30b liegt zwischen den beiden endseitigen Kokillenformteilen 30a, 30c.

Die Kokillenformteile 30a, 30b, 30c sind jeweils positionsfest in die Kokillenhülle 10 eingesetzt und können beim Gießprozess nicht relativ zueinander rotieren. Dabei sind die Kokillenformteile 30a, 30b so ausgebildet, dass sie einen Angusstrommelraum 51 radial einfassen. Außerdem sind die Kokillenformteile 30a, 30b, 30c jeweils ringförmig ausgebildet und umgeben die Rotationsachse A radial sowie in koaxialer Ausrichtung.

Es verbleibt im Inneren der Kokillenhülle 10 sowie zwischen den Kokillenformteilen 30a, 30b, 30c ein Hohlraum 50. Dieser setzt sich zusammen aus dem Angusstrommelraum 51 und zwei ringförmigen Formhohlräumen 52a, 52b. Der Angusstrommelraum 51 erstreckt sich entlang der Rotationsachse A und steht mit einer Angussöffnung 11 in der Kokillenhülle 10, insbesondere im Deckel 13, in Verbindung.

Die ringförmigen Formhohlräume 52a, 52b fassen die Rotationsachse A radial sowie in koaxialer Ausrichtung ein und stehen mit dem Angusstrommelraum 51 in Verbindung, der ebenfalls koaxial zur Rotationsachse A ausgerichtet ist. Man erkennt, dass jeder der ringförmigen Formhohlräume 52a, 52b in einer Trennebene E1, E2 zwischen zwei benachbarten Kokillenformteilen 30a, 30b, 30c liegt.

Ferner sieht man, wie eine zylindrische Innenwandung 16 der Kokillenhülle 10 die ringförmigen Formhohlräume 52a, 52b radial begrenzt.

Wird der Hohlraum 50 über die Angussöffnung 11 mit flüssigem Metall gefüllt, bilden die ringförmigen Formhohlräume 52a, 52b jeweils einen Reibring 101a, 101b und einen Trägertopf 102a, 102b einer Bremsscheibe 100a, 100b ab. Jeder der ringförmigen Formhohlräume 52a, 52b, 52c verfügt über zwei ebene und parallel gegenüberliegende Ringflächen, die jeweils koaxial zur Rotationsachse A ausgerichtet sind. Mit diesen werden Reibflächen der Reibringe 101a, 101b abgebildet.

Die Schleudergusskokillenvorrichtung 1 kann auf Tragwalzen/-rollen aufgelegt werden, auf welche sie um die Rotationsachse A drehbar ist. Die zylindrische Außenwandung der Kokillenhülle 10 bildet mithin ein Lagerelement 12 aus, welches koaxial zur Rotationsachse A ausgerichtet ist.

Nach dem Gießen wird der Deckel 13 von der Kokillenhülle 10 abgenommen und alle Teile in der Kokillenhülle 10 sind in Richtung der Rotationsachse A aus dieser entnehmbar und voneinander trennbar.

Die Schleudergusskokillenvorrichtung 1 nach den Fig. 2 und 3 sind jeweils für die Verwendung in einem erfindungsgemäßen Schleudergussverfahren geeignet. Die Ausführungsformen der Fig. 2 und 3 unterscheiden sich allerdings hinsichtlich des zu fertigenden Bremsscheibentyps.

Unbelüftete Bremsscheiben 100a, 100b sind mit einer Schleudergusskokillenvorrichtung 1 nach den **Fig. 3** herstellbar.

Demgegenüber werden gemäß **Fig. 2** innenbelüftete Bremsscheiben 100a, 100b hergestellt. Hierfür weist die Schleudergusskokillenvorrichtung 1 zusätzlich in jedem der ringförmigen Formhohlräume 52a, 52b einen verlorenen Kern 60a, 60b zur Ausbildung einer Belüftungsstruktur im Reibring auf. Diese Kerne 60a, 60b sind jeweils als Scheibenring mit schlitzförmigen Durchbrüchen ausgebildet.

Die Erfindung ist nicht auf eine der vorbeschriebenen Ausführungsformen beschränkt, sondern in vielfältiger Weise abwandelbar.

So besteht jeweils die Option, andere Lagerelemente vorzusehen oder auch Kühlkanäle in den Kokillenhüllen 10 und/oder den Kokillenformteilen 30a, 30b, 30c vorzusehen. Die verschiedenen Ausführungsformen können auch jeweils derart ergänzt werden, dass ein bereits vorgefertigtes Teil einer Bremsscheibe 100a, 100b, 100c, insbesondere ein Reibring oder ein Trägertopf, mit in der Schleudergusskokillenvorrichtung 1 integriert sind.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. **Schleudergusskokillenvorrichtung** (1) zur Herstellung von Bremsscheiben (100a, 100b), aufweisend
- eine Kokillenhülle (10) aus Metall, die um eine Rotationsachse (A) rotierbar ist,
- wenigstens zwei Kokillenformteile (30a, 30b, 30c), welche in die Kokillenhülle (10) eingesetzt und aus dieser entnehmbar sind,
- wobei ein Hohlraum (50) in der Kokillenhülle (10) verbleibt,
∘ der einen Angusstrommelraum (51) aufweist, der sich entlang der Rotationsachse (A) erstreckt und mit einer Angussöffnung (11) verbunden ist, und
∘ der wenigstens einen ringförmigen Formhohlraum (52a, 52b, 52c) zur Ausbildung eines Reibrings (101a, 101b) einer Bremsscheibe (100a, 100b) und/oder eines Trägertopfes (102a, 102b) einer Bremsscheibe (100a, 100b) aufweist, wobei der ringförmige Formhohlraum (52a, 52b, 52c) die Rotationsachse (A) radial einfasst und mit dem Angusstrommelraum (51) in Verbindung steht.

2. Schleudergusskokillenvorrichtung (1) nach Anspruch 1, **dadurch gekennzeichnet, dass** jeder der ringförmigen Formhohlräume (52a, 52b, 52c) und/oder der Angusstrommelraum (51) koaxial zur Rotationsachse (A) ausgerichtet sind.

3. Schleudergusskokillenvorrichtung (1) nach einem der Ansprüche 1 oder 2, **dadurch gekennzeichnet, dass** die Kokillenformteile (30a, 30b, 30c) jeweils ringförmig ausgebildet sind und die Rotationsachse (A) radial umgeben.

4. Schleudergusskokillenvorrichtung (1) nach einem der vorhergehenden Ansprüche, **dadurch gekennzeichnet, dass** an der Kokillenhülle (10) wenigstens ein Lagerelement (12) ausgebildet oder angeordnet ist, das koaxial zur Rotationsachse (A) positioniert ist.

5. Schleudergusskokillenvorrichtung (1) nach einem der vorhergehenden Ansprüche, **dadurch gekennzeichnet, dass** die Kokillenformteile (30a, 30b, 30c) aus Metall bestehen.

6. Schleudergusskokillenvorrichtung (1) nach einem der vorhergehenden Ansprüche, **dadurch gekennzeichnet, dass** die Kokillenhülle (10) öffenbar ausgebildet ist, vorzugsweise durch einen stirnseitigen Deckel (13), der quer zur Rotationsachse (A) angeordnet ist, oder durch eine Trennebene, welche die Kokillenhülle (10) in zwei Schalen (14, 15) teilt.

7. Schleudergusskokillenvorrichtung (1) nach einem der vorhergehenden Ansprüche, **dadurch gekennzeichnet, dass** in wenigstens einen der ringförmigen Formhohlräume (52a, 52b, 52c) ein verlorener Kern (60a, 60b, 60c) zur Ausbildung einer Belüftungsstruktur im Reibring (101a, 101b) eingelegt ist.

8. Schleudergusskokillenvorrichtung (1) nach einem der vorhergehenden Ansprüche, **dadurch gekennzeichnet, dass** jeder der ringförmigen Formhohlräume (52a, 52b, 52c) in einer Trennebene (E1, E2, E3, ...) zwischen zwei benachbarten Kokillenformteilen (30a, 30b, 30c) liegt.

9. Schleudergusskokillenvorrichtung (1) nach einem der vorhergehenden Ansprüche, **dadurch gekennzeichnet, dass** zwischen den Kokillenformteilen (30a, 30b, 30c) ein Reibring (101a, 101b) oder ein Trägertopf (102a, 102b) eingelegt ist, der an einen der ringförmigen Formhohlräume (52a, 52b, 52c) angrenzt.

10. Schleudergusskokillenvorrichtung (1) nach einem der vorhergehenden Ansprüche, **dadurch gekennzeichnet, dass** wenigstens zwei, vorzugsweise wenigstens drei, und besonders bevorzugt wenigstens fünf ringförmige Formhohlräume (52a, 52b, 52c) ausgebildet sind.

11. Schleudergusskokillenvorrichtung (1) nach einem der vorhergehenden Ansprüche, **dadurch gekennzeichnet, dass** die Kokillenhülle (10) eine zylindrische Innenwandung (16) aufweist.

12. Schleudergusskokillenvorrichtung (1) nach einem der vorhergehenden Ansprüche, **dadurch gekennzeichnet, dass** die Kokillenhülle (10) die ringförmigen Formhohlräume (52a, 52b, 52c) radial begrenzt.

13. **Verwendung** einer Schleudergusskokillenvorrichtung (1) nach einem der Ansprüche 1 bis 12 zur Herstellung eines Reibrings (101a, 101b) einer Bremsscheibe (100a, 100b) oder eines Trägertopfes (102a, 102b) einer Bremsscheibe (100a, 100b) jeweils in einem Schleudergießverfahren.

14. Verwendung einer Schleudergusskokillenvorrichtung (1) nach einem der Ansprüche 1 bis 12 zur Herstellung einer Bremsscheibe (100a, 100b) mit einem Reibring (101a, 101b) und einem Trägertopf (102a, 102b) in einem Schleudergießverfahren.

15. Verwendung einer Schleudergusskokillenvorrichtung (1) nach einem der Ansprüche 1 bis 12 zur Herstellung einer Bremsscheibe (100a, 100b) durch Angießen eines Trägertopfes (102a, 102b) an einem Reibring (101a, 101b) oder durch Angießen eines Reibrings (101a, 101b) an einem Trägertopf (102a, 102b) jeweils in einem Schleudergießverfahren.

16. Verwendung nach einem der Ansprüche 13 bis 15, wobei ein Heißkokillenverfahren durchgeführt wird, bei dem die Wandungen der ringförmigen Formhohlräume (52a, 52b, 52c) vor dem Eingießen von flüssigem Metall in die Angussöffnung (11) beschichtet und auf wenigstens 150°C, vorzugsweise auf wenigstens 200 °C vorgewärmt werden.

17. Verwendung nach einem der Ansprüche 13 bis 15, wobei ein De-Lavaud-Verfahren durchgeführt wird, bei dem die Kokillenhülle (10) und/oder die Kokillenformteile (30a, 30b, 30c) mit einem Fluid, vorzugsweise mit Wasser, gekühlt werden.

## Claims

1. **Spinner casting mould device** (1) for producing brake discs (100a, 100b), having
- one mould sheath (10) made of metal which is rotatable around a rotational axis (A),
- at least two moulding parts (30a, 30b, 30c) which are set into the mould sheath (10) and can be removed from same,
- wherein in the mould sheath (10) remains a cavity (50),
∘ which has one casting on cylinder space (51) which extends along the rotational axis (A) and is connected with one casting on opening (11), and
∘ which has at least one ring-shaped mould cavity (52a, 52b, 52c) for the formation of a friction ring (101a, 101b) of a brake disc (100a, 100b) and/or of a support pot (102a, 102b) of a brake disc (100a, 100b), wherein the ring-shaped mould cavity (52a, 52b, 52c) encloses the rotational axis (A) radially and is in connection with the casting on cylinder space (51).

2. Spinner casting mould device (1) according to claim 1, **characterised in that** each of the ring-shaped mould cavities (52a, 52b, 52c) and/or the casting on cylinder space (51) are positioned coaxially to the rotational axis.

3. Spinner casting mould device (1) according to one of claims 1 or 2, **characterised in that** the moulding parts (30a, 30b, 30c) are in each case formed in a ring shape and encompass the rotational axis (A) radially.

4. Spinner casting mould device (1) according to one of the preceding claims, **characterised in that** at the mould sheath (10) is formed or disposed at least one bearing element (12) which is positioned coaxially to the rotational axis (A).

5. Spinner casting mould device (1) according to one of the preceding claims, **characterised in that** the moulding parts (30a, 30b, 30c) are made of metal.

6. Spinner casting mould device (1) according to one of the preceding claims, **characterised in that** the mould sheath (10) is formed openably, preferably by means of a front side lid (13) which is disposed perpendicularly to the rotational axis (A), or by a dividing plane which divides the mould sheath (10) into two shells (14, 15).

7. Spinner casting mould device (1) according to one of the preceding claims, **characterised in that** a lost core (60a, 60b, 60c) for the formation of a ventilation structure in the friction ring (101a, 101b) is inlaid into at least one of the ring-shaped mould cavities (52a, 52b, 52c).

8. Spinner casting mould device (1) according to one of the preceding claims, **characterised in that** each of the ring-shaped mould cavities (52a, 52b, 52c) lies in a dividing plane (E1, E2, E3, ...) between two adjacent moulding parts (30a, 30b, 30c).

9. Spinner casting mould device (1) according to one of the preceding claims, **characterised in that** between the moulding parts (30a, 30b, 30c) is inlaid a friction ring (101a, 101b) or a support pot (102a, 102b) which abuts at one of the ring-shaped mould cavities (52a, 52b, 52c).

10. Spinner casting mould device (1) according to one of the preceding claims, **characterised in that** at least two, preferably at least three, and especially preferably at least five ring-shaped mould cavities (52a, 52b, 52c) are formed.

11. Spinner casting mould device (1) according to one of the preceding claims, **characterised in that** the mould sheath (10) has a cylindrical internal wall (16).

12. Spinner casting mould device (1) according to one of the preceding claims, **characterised in that** the mould sheath (10) restricts radially the ring-shaped mould cavities (52a, 52b, 52c).

13. **Use** of a spinner casting mould device (1) according to one of claims 1 to 12 for producing a friction ring (101a, 101b) of a brake disc (100a, 100b) or a support pot (102a, 102b) of a brake disc (100a, 100b), in each case in a centrifugal casting method.

14. Use of a spinner casting mould device (1) according to one of claims 1 to 12 for producing a brake disc (100a, 100b) with a friction ring (101a, 101b) and a support pot (102a, 102b) in a centrifugal casting method.

15. Use of a spinner casting mould device (1) according to one of claims 1 to 12 for producing a brake disc (100a, 100b) by casting on a support pot (102a, 102b) to a friction ring (101a, 101b) or by casting on a friction ring (101a, 101b) to a support pot (102a, 102b), in each case in a centrifugal casting method.

16. Use according to one of claims 13 to 15, wherein a hot mould method is carried out in which the walls of the ring-shaped mould cavities (52a, 52b, 52c) prior to the pouring in of molten metal into the casting on opening (11) are coated and preheated to at least 150°C, preferably to at least 200°C.

17. Use according to one of claims 13 to 15, wherein a De-Lavaud-method is carried out in which the mould sheath (10) and/or the moulding parts (30a, 30b, 30c) are cooled with a fluid, preferably with water.

## Revendications

1. **Dispositif de coquille de coulée centrifuge** (1) pour la fabrication de disques de frein (100a, 100b), comportant
- une enveloppe de coquille (10) en métal, qui peut tourner autour d'un axe de rotation (A),
- au moins deux moules de coquille (30a, 30b, 30c), qui peuvent être placés dans l'enveloppe de coquille (10) et être retirés de celle-ci,
- dans lequel il reste un espace creux (50) dans l'enveloppe de coquille (10),
• qui comporte un espace de tambour d'alimentation (51) qui s'étend le long de l'axe de rotation (A) et qui est relié à une ouverture d'alimentation (11), et
• qui comporte au moins une cavité de moulage (52a, 52b, 52c) annulaire pour former un anneau de friction (101a, 101b) d'un disque de frein (100a, 100b) et/ou une cloche de support (102a, 102b) d'un disque de frein (100a, 100b), laquelle cavité de moulage (52a, 52b, 52c) annulaire englobe de façon radiale l'axe de rotation (A) et est en liaison avec l'espace de tambour d'alimentation (51).

2. Dispositif de coquille de coulée centrifuge (1) selon la revendication 1, **caractérisé en ce que** chacune des cavités de moulage (52a, 52b, 52c) annulaires et/ou l'espace de tambour d'alimentation (51) sont orientés de façon coaxiale à l'axe de rotation (A).

3. Dispositif de coquille de coulée centrifuge (1) selon l'une quelconque des revendications 1 ou 2, **caractérisé en ce que** les moules de coquille (30a, 30b, 30c) sont réalisés à chaque fois annulaires et entourent radialement l'axe de rotation (A).

4. Dispositif de coquille de coulée centrifuge (1) selon l'une quelconque des revendications précédentes, **caractérisé en ce qu'**au moins un élément de support (12), qui est positionné de façon coaxiale à l'axe de rotation (A), est réalisé ou agencé au niveau de l'enveloppe de coquille (10).

5. Dispositif de coquille de coulée centrifuge (1) selon l'une quelconque des revendications précédentes, **caractérisé en ce que** les moules de coquille (30a, 30b, 30c) sont en métal.

6. Dispositif de coquille de coulée centrifuge (1) selon l'une quelconque des revendications précédentes, **caractérisé en ce que** l'enveloppe de coquille (10) est réalisée de manière à pouvoir être ouverte, de préférence avec un couvercle (13) frontal qui est agencé transversalement à l'axe de rotation (A) ou avec un plan de séparation qui sépare l'enveloppe de coquille (10) en deux coques (14, 15).

7. Dispositif de coquille de coulée centrifuge (1) selon l'une quelconque des revendications précédentes, **caractérisé en ce qu'**un noyau perdu (60a, 60b, 60c) destiné à former une structure d'aération dans l'anneau de friction (101a, 101b) est placé dans au moins une des cavités de moulage (52a, 52b, 52c) annulaires.

8. Dispositif de coquille de coulée centrifuge (1) selon l'une quelconque des revendications précédentes, **caractérisé en ce que** chacune des cavités de moulage (52a, 52b, 52c) annulaires se trouve dans un plan de séparation (E1, E2, E3, ...) entre deux moules de coquille (30a, 30b, 30c) voisins.

9. Dispositif de coquille de coulée centrifuge (1) selon l'une quelconque des revendications précédentes, **caractérisé en ce qu'**un anneau de friction (101a, 101b) ou une cloche de support (102a, 102b), qui est adjacent à l'une des cavités de moulage (52a, 52b, 52c) annulaires, est placé entre les moules de coquille (30a, 30b, 30c).

10. Dispositif de coquille de coulée centrifuge (1) selon l'une quelconque des revendications précédentes, **caractérisé en ce qu'**au moins deux, de préférence au moins trois et de manière plus particulièrement préférée au moins cinq, cavités de moulage (52a, 52b, 52c) annulaires sont réalisées.

11. Dispositif de coquille de coulée centrifuge (1) selon l'une quelconque des revendications précédentes, **caractérisé en ce que** l'enveloppe de coquille (10) comporte une paroi intérieure (16) cylindrique.

12. Dispositif de coquille de coulée centrifuge (1) selon l'une quelconque des revendications précédentes, **caractérisé en ce que** l'enveloppe de coquille (10) délimite radialement les cavités de moulage (52a, 52b, 52c) annulaires.

13. **Utilisation** d'un dispositif de coquille de coulée centrifuge (1) selon l'une quelconque des revendications 1 à 12 pour la fabrication d'un anneau de friction (101a, 101b) d'un disque de frein (100a, 100b) ou d'une cloche de support (102a, 102b) d'un disque de frein (100a, 100b), à chaque fois dans un procédé de coulée centrifuge.

14. Utilisation d'un dispositif de coquille de coulée centrifuge (1) selon l'une quelconque des revendications 1 à 12 pour la fabrication d'un disque de frein (100a, 100b) avec un anneau de friction (101a, 101b) et avec une cloche de support (102a, 102b) dans un procédé de coulée centrifuge.

15. Utilisation d'un dispositif de coquille de coulée centrifuge (1) selon l'une quelconque des revendications 1 à 12 pour la fabrication d'un disque de frein (100a, 100b) par coulée d'une cloche de support (102a, 102b) sur un anneau de friction (101a, 101b) ou par coulée d'un anneau de friction (101a, 101b) sur une cloche de support (102a, 102b), à chaque fois dans un procédé de coulée centrifuge.

16. Utilisation selon l'une quelconque des revendications 13 à 15, dans laquelle est mis en oeuvre un procédé de coulée à coquille chaude dans lequel les parois des cavités de moulage (52a, 52b, 52c) annulaires sont revêtues avant la coulée d'un métal liquide dans l'ouverture d'alimentation (11) et sont préchauffées à au moins 150 °C, de préférence à au moins 200 °C.

17. Utilisation selon l'une quelconque des revendications 13 à 15, dans laquelle est mis en oeuvre un procédé De-Lavaud dans lequel l'enveloppe de coquille (10) et/ou les moules de coquille (30a, 30b, 30c) sont refroidis avec un fluide, de préférence avec de l'eau.
